(19) **Europäisches Patentamt European Patent Office Office européen des brevets**

(11) **EP 2 756 592 B1**

(12) **FASCICULE DE BREVET EUROPEEN**

(45) Date de publication et mention de la délivrance du brevet:
**27.03.2019 Bulletin 2019/13**

(21) Numéro de dépôt: **12767050.3**

(22) Date de dépôt: **10.09.2012**

(51) Int Cl.:
**H02P 1/28** *(2006.01)*   **H02P 1/02** *(2006.01)*

(86) Numéro de dépôt international:
**PCT/FR2012/052012**

(87) Numéro de publication internationale:
**WO 2013/038094 (21.03.2013 Gazette 2013/12)**

(54) **PROCÉDÉ DE COMMANDE D'UN INTERRUPTEUR COMMANDE PILOTANT L'ALIMENTATION D'UN MOTEUR ÉLECTRIQUE**

VERFAHREN ZUM STEUERN EINES GESTEUERTEN SCHALTERS DER DIE VERSORGUNG EINES ELEKTRISCHEN MOTORS SCHALTET

METHOD FOR CONTROLLING A CONTROLLED SWITCH OPERATING THE POWER SUPPLY OF AN ELECTRIC MOTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.09.2011 FR 1102767**

(43) Date de publication de la demande:
**23.07.2014 Bulletin 2014/30**

(73) Titulaire: **Schneider Electric Industries SAS 92500 Rueil-Malmaison (FR)**

(72) Inventeurs:
• **PENKOV, Delcho**
 **F-38400 Saint Martin D'Heres (FR)**
• **COTE, Alain**
 **F-38130 Echirolles (FR)**

(74) Mandataire: **Tripodi, Paul**
 **Schneider Electric Industries SAS**
 **Service Propriété Industrielle**
 **World Trade Center / 38EE1**
 **5 Place Robert Schuman**
 **38050 Grenoble Cedex 09 (FR)**

(56) Documents cités:
 **WO-A1-2006/034977    WO-A2-01/89072**
 **US-A- 5 008 608**

**Description**

DOMAINE TECHNIQUE

La présente invention concerne un procédé de commande d'un interrupteur commandé pilotant l'alimentation d'un moteur électrique depuis une source de tension alternative. L'invention concerne aussi un support d'enregistrement de données lisible par un calculateur sur lequel est enregistré un programme comprenant des éléments logiciels de mise en oeuvre des étapes d'un tel procédé. L'invention concerne encore un dispositif de commande d'un interrupteur commandé pilotant l'alimentation électrique d'un moteur depuis une source de tension alternative. L'invention concerne enfin un système comprenant un tel dispositif de commande.

ETAT DE LA TECHNIQUE

Le démarrage d'un moteur électrique pose problème. En effet, lors du démarrage, un appel de courant important sur le réseau électrique qui l'alimente est réalisé par le moteur. Il s'ensuit une baisse de la tension du réseau qui peut entrainer disfonctionnement de certaines charges sensibles. Ceci peut aussi provoquer des délestages sur le réseau.

Pour éviter ce problème, il est connu de ne pas connecter directement un moteur électrique sur le réseau lors de son démarrage. Pour ce faire, on connecte le moteur au réseau via un système de démarrage permettant d'éviter les inconvénients mentionnés précédemment.

On peut par exemple connecter le moteur au réseau au travers d'un dispositif permettant le pilotage de la vitesse du moteur. Par exemple, un tel dispositif comprend un convertisseur de fréquence. Le coût d'un tel dispositif est élevé, surtout s'il n'est utilisé que pendant la phase de démarrage.

Aussi, pour éviter un coût élevé, on peut également connecter le moteur au réseau au travers d'un système de démarrage progressif, par interrupteurs commandés permettant d'élever progressivement la valeur efficace de la tension appliquée au moteur. On connaît notamment un tel système du document WO 01/89 074. Dans de tels systèmes, les interrupteurs commandés sont réalisés par des composants semi-conducteurs, notamment des thyristors. De ce fait, les interrupteurs commandés sont fragiles et sensibles aux tensions et courants transitoires auxquels ils sont soumis lors des commutations. Il est courant d'utiliser un même système de démarrage progressif pour démarrer plusieurs moteurs de manière séquentielle. Dès lors, on comprend qu'une panne sur le système de démarrage peut provoquer des pertes substantielles de production dans certaines applications. Aussi, il apparaît important de fiabiliser le fonctionnement de ces systèmes de démarrage, en particulier de fiabiliser le fonctionnement des systèmes de démarrage de moteurs dont les tensions nominales sont supérieures à 500 V, voire supérieures à 1000 V, voire égales ou supérieures à 5,5 kV, du fait des valeurs des tensions et des courants transitoires auxquels sont soumis les interrupteurs commandés dans ces cas. Un autre dispositif de commande de moteur est décrit dans le document US5008608.

EXPOSE DE L'INVENTION

Un but de l'invention est de fournir un procédé de commande d'un interrupteur commandé permettant de remédier aux problèmes évoqués précédemment et améliorant les procédés de commande connus de l'art antérieur. En particulier, l'invention propose un procédé de commande simple et efficace permettant d'améliorer la durée de vie de l'interrupteur commandé et donc de fiabiliser les systèmes intégrant un tel interrupteur commandé.

Un procédé selon l'invention est défini dans la revendication 1.

Un procédé de commande d'un interrupteur commandé pilotant l'alimentation d'un moteur électrique depuis une source de tension alternative, comprenant une étape d'actionnement de la fermeture de l'interrupteur commandé, l'instant d'actionnement étant fonction d'une valeur caractéristique de la valeur de la tension électrique aux bornes de l'interrupteur commandé. Le procédé de commande comprend les étapes suivantes :

- une étape de détermination d'au moins une valeur caractéristique d'une évolution de la valeur de tension aux bornes de l'interrupteur commandé,
- une étape de détermination d'une première plage temporelle à partir de la valeur caractéristique, et
- l'étape d'actionnement de la fermeture de l'interrupteur commandé étant réalisée au cours de la première plage temporelle,

ladite première plage temporelle étant définie comme comprenant l'ensemble des instants t vérifiant les formules suivantes :

$$\begin{cases} t - t_{I0} < TK(k + x) \\ t - t_{I0} > TK(k + 1 - y) \\ k \in [0..n] \end{cases}$$

avec

tI0 : l'instant d'ouverture de l'interrupteur commandé,
TK : la période de l'évolution de la valeur de tension aux bornes de l'interrupteur commandé,
n : un entier naturel, par exemple n = 10,
x, y : valeurs variables.

Avantageusement, l'étape de détermination d'au moins une valeur caractéristique de l'évolution est mise en oeuvre par mesure et/ou par calcul dans une phase de configuration du procédé, notamment une phase de test, ou dans une phase de mise en oeuvre du procédé.

Avantageusement, la valeur caractéristique de l'évolution comprend une valeur représentative de la période temporelle des évolutions d'une valeur de tension aux bornes de l'interrupteur commandé suite à une ouverture de l'interrupteur commandé.

Avantageusement, x est compris entre 0 et 0.3, de préférence compris entre 0 et 0.25, de préférence compris entre 0 et 0.2 et/ou en ce que y est compris entre 0 et 0.3, de préférence compris entre 0 et 0.25, de préférence compris entre 0 et 0.2.

De préférence, le procédé comprend l'utilisation d'une valeur temporelle de déclenchement définissant une deuxième plage temporelle, l'étape d'actionnement de la fermeture de l'interrupteur commandé ayant lieu dès l'instant commun à la première plage temporelle et à la deuxième plage temporelle.

De préférence, la deuxième plage temporelle est définie comme comprenant l'ensemble des instants t vérifiant la formule suivante : $\left| t - t_{V0} - \alpha \right| < \dfrac{TK}{2}$ avec

tV0 : l'instant où la tension alternative de la source s'annule, TK : la période de l'évolution de la valeur de tension aux bornes de l'interrupteur commandé,
α : déclenchement de la commutation de l'interrupteur commandé.

Un support d'enregistrement de données selon l'invention lisible par un calculateur sur lequel est enregistré un programme comprend des moyens logiciels de mise en oeuvre des étapes du procédé tel que défini ci-dessus.

Un dispositif de commande d'un interrupteur commandé, pilotant l'alimentation électrique d'un moteur depuis une source de tension alternative, comprend des éléments matériels et/ou logiciels de mise en oeuvre du procédé tel que défini ci-dessus.

De préférence, l'interrupteur commandé comprend un thyristor.

Un système, notamment un système de démarrage d'un moteur électrique, selon l'invention comprend un dispositif de commande tel que défini ci-dessus.

L'invention concerne encore un programme informatique comprenant un moyen de code de programme informatique adapté à la réalisation des étapes du procédé défini précédemment, lorsque le programme tourne sur un calculateur.

BREVE DESCRIPTION DES DESSINS

Les dessins annexés représentent, à titre d'exemple, un mode d'exécution d'un procédé de commande d'un interrupteur commandé selon l'invention et un mode de réalisation d'un dispositif de commande d'un interrupteur commandé selon l'invention.

La figure 1 est un schéma électrique d'une installation comprenant un mode de réalisation d'un dispositif de commande d'un interrupteur commandé selon l'invention.

La figure 2 est un graphique temporel, sur une demi-période, des évolutions de l'intensité parcourant un interrupteur commandé et des potentiels électriques en amont et en aval de l'interrupteur commandé.

La figure 3 est un graphique temporel des évolutions de l'intensité parcourant un interrupteur commandé et des potentiels électriques en amont et en aval de l'interrupteur commandé, lorsque le courant dans le thyristor passe par zéro et est naturellement interrompu, puis lors d'une commutation de fermeture de l'interrupteur commandé.

La figure 4 est un graphique temporel des évolutions de l'intensité parcourant un interrupteur commandé et des potentiels électriques en amont et en aval de l'interrupteur commandé, lors d'une commutation de fermeture de l'interrupteur commandé.

La figure 5 est un schéma électrique équivalent d'une installation électrique telle que représentée à la figure 1.

La figure 6 est un schéma électrique équivalent de l'installation électrique lors de la fermeture d'un interrupteur commandé.

La figure 7 est un schéma électrique équivalent de l'installation électrique lors de l'ouverture d'un interrupteur commandé.

La figure 8 est un graphique représentant l'évolution de l'inductance équivalente du moteur en fonction de sa vitesse de rotation.

La figure 9 est un ordinogramme d'un mode d'exécution d'un procédé de commande d'un interrupteur commandé selon l'invention.

La figure 10 est un ordinogramme d'un exemple de procédure de détermination de la période de l'évolution de la tension aux bornes d'un interrupteur commandé suite à sa commutation d'ouverture.

La figure 11 est un graphique temporel des évolutions de la tension aux bornes d'un interrupteur commandé suite à la commutation d'ouverture de celui-ci.

DESCRIPTION DETAILLEE DE MODES DE REALISATION PREFERES

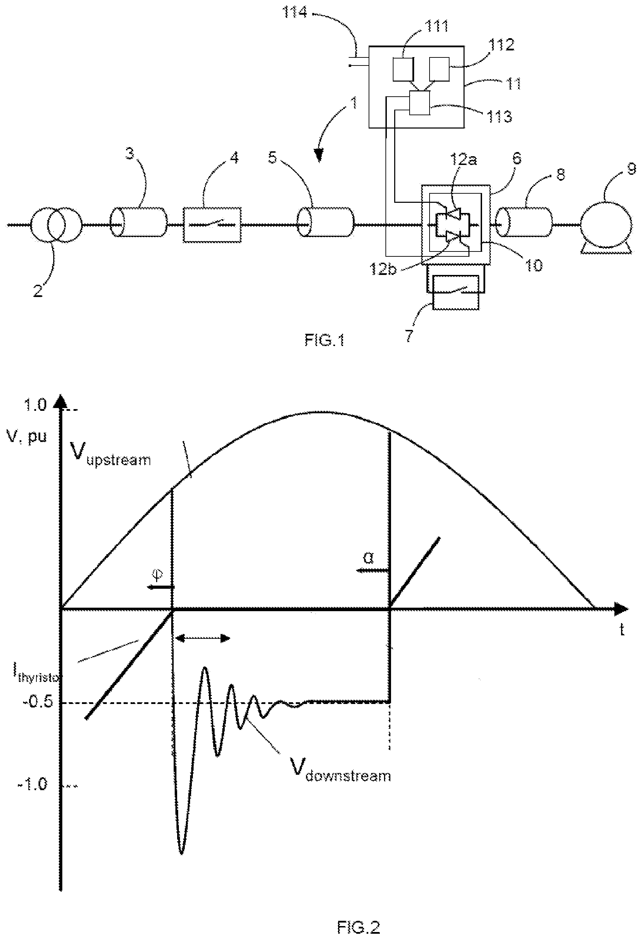

Un mode de réalisation d'une installation 1 selon l'invention est décrit ci-après en référence à la figure 1. L'installation comprend principalement un moteur électrique 9 alimenté par une source de tension 2. La source de tension, constituée par exemple par un transformateur, est reliée à un disjoncteur 4 via un premier câble 3. Ce disjoncteur est relié à un système de démarrage de moteur 6 via un deuxième câble 5. Ce système de démarrage est relié au moteur 9 via un troisième câble 8. Un dispositif de contacteur est disposé en parallèle du système de démarrage. Il permet de court-circuiter le système de démarrage une fois que le moteur a atteint une vitesse suffisante.
Le moteur est du type à courant alternatif, notamment du type asynchrone. Il est triphasé. Sa tension nominale est supérieure à 500 V, voire supérieure à 1000 V, voire supérieure ou égal à 5,5 kV.
Le moteur est donc connecté au réseau électrique, en particulier à la source de tension 2, via un système de démarrage de moteur 6.
Le système de démarrage du moteur comprend principalement un interrupteur commandé 10 sur chaque ligne d'alimentation du moteur, par exemple, un interrupteur commandé sur chacune des trois phases d'alimentation d'un moteur triphasé. L'interrupteur commandé peut être un transistor de puissance. Avantageusement, l'interrupteur commandé comprend un thyristor 12a, 12b, en particulier deux thyristors 12a, 12b montés tête-bêche en parallèle.
Le système de démarrage du moteur comprend également un dispositif de commande 11 de l'interrupteur commandé. Dans le cas représenté, le dispositif de commande comprend deux sorties attaquant chacune une gâchette des thyristors 12a, 12b. Ainsi, le dispositif de commande permet de générer une impulsion commandant le déclenchement de la commutation de chacun des thyristors de son état bloqué à son état passant.
Pour ce faire, le dispositif de commande 11 comprend un premier module 111 déterminant, pour chaque alternance de la tension alternative de la source de tension, une première plage temporelle selon une logique qui sera détaillée plus bas. Par ailleurs, le dispositif de commande comprend un deuxième module 112 déterminant, pour chaque alternance de la tension alternative de la source de tension, une deuxième plage temporelle à partir d'une valeur d'angle $\alpha$ de déclenchement de la commutation de l'interrupteur commandé propre à l'obtention d'une valeur de tension efficace adaptée au démarrage du moteur. L'angle $\alpha$ est par exemple défini par rapport au dernier instant où la tension de la source s'annule. Un angle de $\pi$ représente une alternance complète. Il est clair que, tout au long de la phase de démarrage du moteur, cette valeur d'angle $\alpha$ évolue de sorte que la tension efficace appliquée au moteur croisse progressivement. La logique de détermination de la deuxième plage temporelle sera détaillée plus bas.
Le dispositif de commande 11 comprend encore un troisième module 113 utilisant les première et deuxième plages temporelle définies précédemment. Ce troisième module confronte les première et deuxième plages temporelles et, dès que survient un instant commun aux première et deuxième plages temporelles, il émet une impulsion de commande de l'interrupteur commandé, notamment une impulsion de commande de commutation de fermeture de l'un des deux thyristors. Bien entendu, la commutation d'ouverture d'un thyristor se fait lorsque le courant circulant dans ce thyristor s'annule.

Pour déterminer les première et deuxième plages temporelles, le dispositif de commande, en particulier les premier et deuxième modules utilisent des informations représentées par la référence 114 et comprenant par exemple la vitesse de rotation du moteur et/ou la tension nominale du moteur et/ou la puissance du moteur et/ou l'intensité du courant d'alimentation du moteur et/ou toute donnée de caractéristique électrique du réseau, des câbles de liaison et du moteur. Ces informations peuvent être mesurées, estimées, calculées ou saisies.

Une fois que le moteur a atteint sa vitesse nominale ou une fois que le moteur a atteint une vitesse seuil, le système de démarrage est court-circuité à l'aide d'un contacteur 7.

Comme représenté aux figures 2 à 4 et 11, dans une application telle que définie précédemment, suite à une commutation d'ouverture d'un thyristor à un instant $t_{I0}$, il se produit une tension aux bornes du thyristor. Le potentiel en amont du thyristor est fixé par la source de tension et représenté par la courbe $V_{upstream}$. Le potentiel en aval du thyristor représenté par la courbe $V_{downstream}$ en aval du thyristor comprend quant à lui une composante sensiblement continue lors de la durée d'interruption et une composante transitoire et oscillatoire. Il s'ensuit que la tension existant entre les bornes du thyristor est représentée par l'écart existant entre les courbes $V_{upstream}$ et $V_{downstream}$. De la même façon, l'intensité du courant circulant au travers du thyristor est représentée par la courbe $I_{thyristor}$. C'est l'annulation de l'intensité de ce courant qui provoque la commutation d'ouverture du thyristor. Par contre, dès que le thyristor retrouve son état passant, l'intensité circulant au travers du thyristor augmente sensiblement, et peut être approchée dans les premiers instants après l'ordre de fermeture, à une sinusoïde de haute fréquence amortie. On remarque notamment qu'il se produit une composante courant transitoire et oscillatoire traversant le thyristor lors de sa commutation de fermeture. On a également remarqué que la composante transitoire du courant traversant l'interrupteur commandé suite à la commutation de fermeture de celui-ci est proportionnelle à la tension présente aux bornes de l'interrupteur commandé juste avant cette commutation. En conséquence, plus la tension aux bornes de l'interrupteur commandé est importante et plus l'interrupteur commandé est sollicité suite à sa commutation de fermeture. Par ailleurs, plus on sollicite l'interrupteur commandé et plus sa durée de vie est limitée. Ainsi, plus on sollicite les interrupteurs commandés d'un dispositif de démarrage du moteur et plus on réduit sa fiabilité. On pourrait remédier à ce problème en utilisant les interrupteurs commandés robustes ou fiables, capables de supporter de fortes sollicitations. Cependant, de tels composants coûtent très cher. On pourrait également utiliser dans le circuit des dispositifs de protection permettant d'éviter de fortes intensités de courants transitoires. De tels dispositifs de protection coûtent également cher. Par ailleurs, il faut encore implanter de tels dispositifs dans les installations.

Le dispositif de commande décrit précédemment comprend tous les éléments matériels et/ou logiciels nécessaires à la mise en oeuvre du procédé de commande objet de l'invention. En particulier, le dispositif de commande comprend un élément d'actionnement ou de commande de la fermeture de l'interrupteur commandé en fonction d'une valeur caractéristique de la valeur de la tension électrique aux bornes de l'interrupteur commandé. Il comprend de préférence un élément de détermination d'au moins une valeur caractéristique d'une évolution de la valeur de tension aux bornes de l'interrupteur commandé, un élément de détermination d'une première plage temporelle à partir de la valeur caractéristique et un élément pour actionner la fermeture de l'interrupteur au cours de la première plage temporelle. Il comprend de préférence un élément de détermination d'une deuxième plage temporelle à partir de la valeur caractéristique et un élément pour actionner la fermeture de l'interrupteur au cours de la première plage temporelle. Tous ces éléments peuvent comprendre des éléments logiciels.

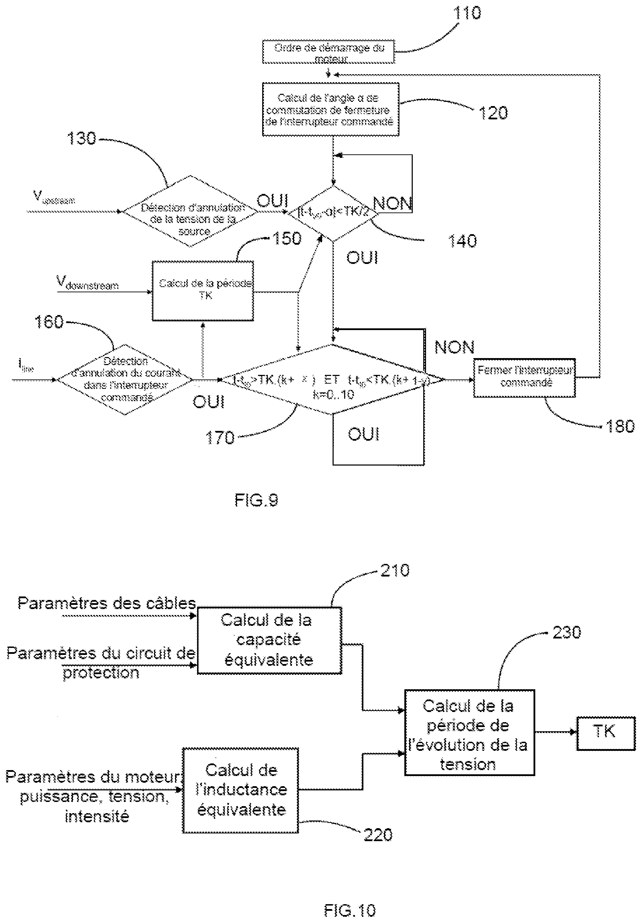

Pour éviter ces inconvénients, on commande l'interrupteur commandé selon l'invention. Un premier mode d'exécution du procédé de commande d'un interrupteur commandé selon l'invention est décrit ci-après en référence à la figure 9.

Dans une première étape 110, on commande le démarrage du moteur 9.

Dans une deuxième étape 120, on calcule l'instant auquel l'interrupteur commandé 10 doit être commuté en fermeture. Cet instant est habituellement défini par un angle $\alpha$ traduisant la durée séparant l'instant $t_{V0}$ d'annulation de la tension de la source alternative et l'instant de commutation, l'angle $\pi$ représentant une alternance de la tension de la source alternative. Cet angle $\alpha$ est défini en fonction de différents paramètres, notamment le couple mécanique désiré au démarrage, se traduisant par une tension efficace à atteindre à ses bornes. Dans la phase de démarrage, plus la vitesse augmente et plus le temps d'ouverture de l'interrupteur commandé diminue. Il s'ensuit que la valeur efficace de la tension électrique appliquée au moteur augmente progressivement.

Dans une troisième étape 130, on mesure la tension en amont de l'interrupteur commandé et on détecte l'instant $t_{V0}$ d'annulation de la tension de la source électrique. Dès que cet instant est détecté, on passe à une quatrième étape 140.

Dans la quatrième étape 140, on calcule la valeur absolue de la différence entre :

- la durée séparant l'instant présent et l'instant $t_{V0}$, et
- la durée définie par l'angle a.

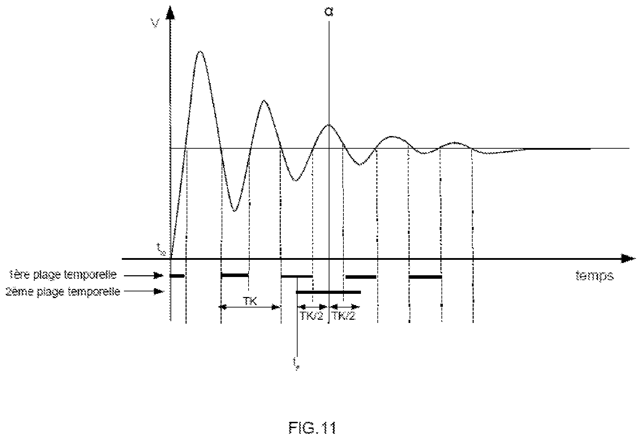

Par ailleurs, on vérifie si cette valeur absolue est inférieure à la demi-période TK/2 des oscillations de la tension aux bornes de l'interrupteur commandé suite à une commutation d'ouverture de cet interrupteur commandé. Si tel est le cas, on passe à une étape 170. En d'autres termes, on définit dans cette étape 140 une plage temporelle autour de l'instant déterminé par l'angle a, en particulier centrée sur l'instant déterminé par l'angle a. Cette plage temporelle définit les instants où il faut déclencher la commutation de fermeture de l'interrupteur commandé afin d'obtenir une valeur efficace de tension appliquée au moteur qui soit adéquate. Cette plage temporelle est représentée à la figure 11 sous la désignation « deuxième plage temporelle ».

Dans une cinquième étape 150, on mesure la tension en aval de l'interrupteur commandé, on analyse cette tension et on en déduit la valeur de la période TK des oscillations de la tension aux bornes de l'interrupteur commandé suite à une commutation d'ouverture de cet interrupteur commandé. Cette valeur est utilisée dans les étapes 140 et 170.

Dans une sixième étape 160, on mesure l'intensité du courant traversant l'interrupteur commandé et on détecte l'instant $t_{I0}$ d'annulation de ce courant. Dès que cet instant est détecté, on passe à l'étape 170. On envoie également l'information de détection de cette annulation à l'étape 150 de sorte à démarrer une analyse de la tension en aval de l'interrupteur commandé.

Dans l'étape 170, on calcule la durée séparant l'instant présent et l'instant tl0, et on vérifie :

si cette durée est supérieure à TK(k + x) et
si cette durée est inférieure à TK(k+1-$y$)

avec

k : une variable de type entier naturel telle que k $\in$ [0..n]
n : un entier naturel, par exemple n = 10 ou 15 ou 12. n peut également prendre n'importe quelle valeur entière comprise entre 1 inclus et 9 inclus.
x est avantageusement compris entre 0 et 0.3, de préférence compris entre 0 et 0.25, de préférence compris entre 0 et 0.2
y est avantageusement compris entre 0 et 0.3, de préférence compris entre 0 et 0.25, de préférence compris entre 0 et 0.2.

De préférence encore, x = y.

Si tel est le cas, on boucle sur cette étape 170 et, si tel n'est pas le cas, on passe à une étape 180 dans laquelle on commande la fermeture de l'interrupteur commandé, puis on boucle sur l'étape 120.

En d'autres termes, on définit dans l'étape 170 une plage temporelle pendant laquelle la valeur de la tension aux bornes de l'interrupteur commandé est minimisée, c'est-à-dire est sensiblement inférieure à un seuil donné. En particulier, avec une valeur x = 0,25 et une valeur y = 0,25, on obtient une plage temporelle correspondant aux instants pendant lesquels se produisent les alternances négatives de la composante alternative de la tension aux bornes de l'interrupteur commandé. On remarque que la plage temporelle définie dans cette étape est discontinue. Avec une valeur x = 0,25 et une valeur y = 0,25, chaque période de la plage temporelle dure environ TK/2. Bien entendu après la durée TK(n+1-$y$) la plage temporelle n'est plus interrompue jusqu'à la fin de l'alternance courante de la tension de la source de tension. Cette plage temporelle est représentée partiellement à la figure 11 sous la désignation « première plage temporelle ». Cette plage temporelle permet de s'assurer que la tension aux bornes de l'interrupteur commandé n'est pas trop importante lorsqu'on commande la fermeture de l'interrupteur commandé.

En définitive, on remarque que l'interrupteur commandé est commuté en fermeture dès le premier instant $t_F$ commun aux première et deuxième plages temporelles, comme représenté à la figure 11. Il se produit donc un léger décalage relativement à la valeur $\alpha$ calculée à l'étape 120, mais ce décalage est faible compte tenu de la fréquence TK des oscillations de la tension et son influence sur la valeur efficace de la tension appliquée au moteur est donc tout à fait négligeable ou ne comporte pas d'inconvénients sur le fonctionnement global du démarreur progressif.

Ce procédé est itéré sur chaque alternance de la tension alternative de la source de tension. Ainsi, on définit deux plages temporelles par alternance de la tension alternative de la source. Evidemment, lorsqu'on utilise un interrupteur commandé comprenant un premier thyristor et un deuxième thyristor, on utilise le premier thyristor lors des alternances positives et le deuxième thyristor lors des alternances négatives.

Un deuxième mode d'exécution du procédé de commande selon l'invention (non représenté) diffère du premier mode d'exécution décrit précédemment en ce qu'il ne comprend pas l'étape 150. Dans ce mode de réalisation, la période TK des oscillations de la tension aux bornes de l'interrupteur commandé suite à une commutation d'ouverture de cet interrupteur commandé, est déterminée autrement. Dans ce cas, on utilise par exemple une procédure préalable de détermination de la période TK des oscillations. Ainsi, dans une étape 210, on recueille des paramètres relatifs aux câbles du réseau et des paramètres relatifs au circuit de protection se trouvant au niveau du système de démarrage et on calcule une capacité équivalente du système. Parallèlement, dans une étape 220, on recueille des paramètres relatifs au moteur, notamment sa puissance, sa tension, son intensité, et on calcule une inductance équivalente du système. Dans une étape 230, on utilise les capacités et inductances équivalentes calculées précédemment pour déterminer la période TK des oscillations.

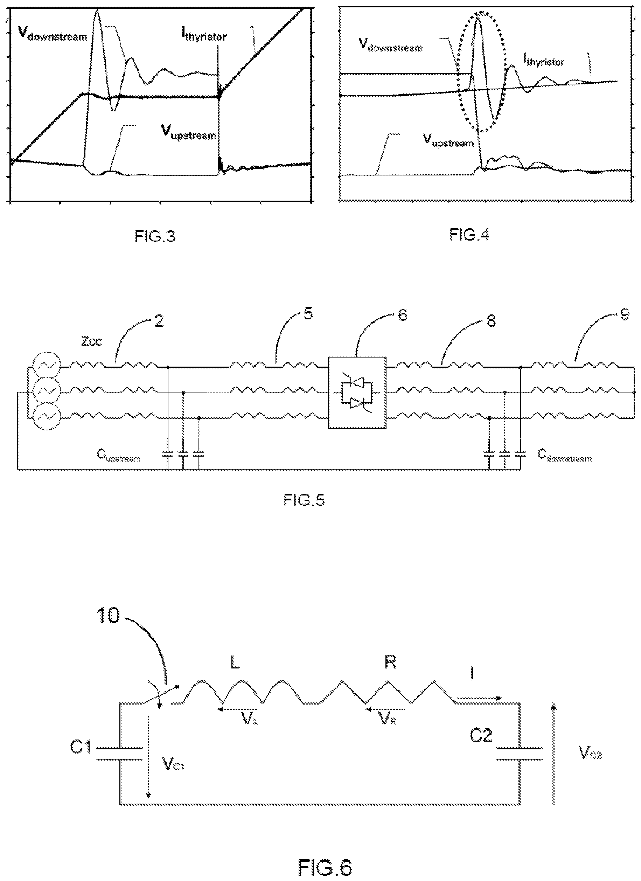

Effet, on remarque que l'installation 1 peut être modélisée comme représenté à la figure 5.

Notamment, comme représenté à la figure 6, lors de la commutation de fermeture de l'interrupteur commandé, la modélisation de l'installation peut être encore simplifiée. Ainsi, en utilisant les formules suivantes :

$$\frac{dI(t)}{dt} = I(t)\Big|_{t=1\mu s} = \frac{-(V_{C1}+V_{C2})}{w_{current}.L}.e^{-10^{-6}/T}.\sin(w.10^{-6})$$

$$w_{current} = \frac{1}{\sqrt{L.\dfrac{C1.C2}{C1+C2}}}$$

$$T = \frac{2L}{R}$$

on peut déterminer la période T des oscillations du courant traversant l'interrupteur commandé. La fréquence des oscillations est de l'ordre de quelques dizaines de kHz.

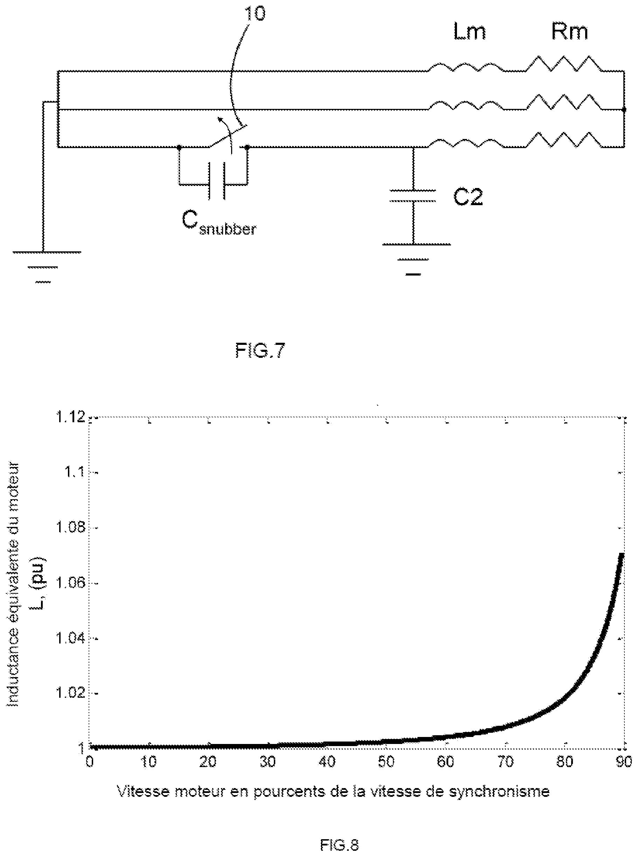

De la même manière, comme représente à la figure 7, lors de la commutation d'ouverture de l'interrupteur commandé, la modélisation de l'installation peut encore être simplifiée. Ainsi en utilisant les formules suivantes :

$$F_{downstream\_voltage} = \frac{1}{2.\pi.\sqrt{L_{eq}.C_{eq}}}$$

$$L_{eq} = Lm + \frac{1}{2}Lm = \frac{3}{2}Lm$$

$$C_{eq} = C_{snubber} + C2$$

on peut déterminer la fréquence des oscillations de la tension aux bornes de l'interrupteur commandé suite à l'ouverture de l'interrupteur commandé. La fréquence des oscillations est de l'ordre de plusieurs kilohertz.

Un troisième mode d'exécution du procédé de commande selon l'invention (non représenté) diffère du premier mode d'exécution décrit précédemment en ce qu'il ne comprend pas D'étape 150. Dans ce mode de réalisation, la période TK (ou la fréquence) des oscillations de la tension aux bornes de l'interrupteur commandé, suite à une commutation d'ouverture de cet interrupteur commandé, est déterminée lors d'une phase d'essai ou d'apprentissage ou tout au long du démarrage du moteur.

Dans la pratique, l'inductance équivalente du moteur peut montrer des variations bien plus importantes que celle présentée sur la figure 10, pour plusieurs raisons :

- à cause de l'accélération,
- à cause d'une variation avec la vitesse des inductances du stator ou du rotor et/ou de la magnétisation du moteur

Ainsi il peut être approprié d'utiliser des méthodes sophistiquées d'estimation de l'inductance équivalente du moteur pour disposer de sa valeur la plus précise tout au long du démarrage du moteur.

Dans les différents modes d'exécution qui précèdent, on met en oeuvre une étape d'actionnement de la fermeture de l'interrupteur commandé, l'étape d'actionnement étant fonction d'une valeur caractéristique de la valeur de la tension électrique aux bornes de l'interrupteur commandé. En particulier, on choisit de préférence des plages temporelles pendant lesquelles la valeur de la tension aux bornes de l'interrupteur commandé est minimisée pour commander la fermeture de l'interrupteur commandé.

En particulier, on détermine au moins une valeur TK caractéristique de l'évolution de la valeur de la tension aux bornes de l'interrupteur commandé, on détermine une première plage temporelle à partir de la valeur caractéristique et on actionne la fermeture de l'interrupteur commandé, cette fermeture étant réalisée au cours de la première plage temporelle.

Le dispositif et le procédé selon l'invention présentent de nombreux avantages :

   ils permettent de réduire l'intensité des courants transitoires lors des commutations de fermeture des interrupteurs commandés,
   ils permettent de réduire les risques de pannes des systèmes de démarrage de moteurs qui en sont équipés,
   ils permettent d'éviter l'utilisation de dispositifs de protection,
   ils permettent d'augmenter la durée de vie des interrupteurs commandés.

Par ailleurs, le procédé selon l'invention peut être mis en oeuvre par une simple mise à jour logiciel d'un dispositif de commande existant.

**Revendications**

1. Procédé de commande d'un interrupteur commandé (10) pilotant l'alimentation d'un moteur électrique depuis une source de tension alternative (2), comprenant une étape d'actionnement de la fermeture de l'interrupteur commandé, l'instant d'actionnement étant fonction d'une valeur caractéristique de la valeur de la tension électrique aux bornes de l'interrupteur commandé,
   procédé **caractérisée en ce qu'**il comprend les étapes suivantes :

   une étape de détermination d'au moins une valeur (TK) caractéristique d'une évolution de la valeur de tension aux bornes de l'interrupteur commandé,
   une étape de détermination d'une première plage temporelle à partir de la valeur caractéristique, et
   l'étape d'actionnement de la fermeture de l'interrupteur commandé étant réalisée au cours de la première plage temporelle.
   ladite première plage temporelle étant définie comme comprenant l'ensemble des instants t vérifiant les formules suivantes :

$$\begin{cases} t - t_{I0} < TK(k + x) \\ t - t_{I0} > TK(k + 1 - y) \\ k \in \left[0..n\right] \end{cases}$$

   avec

   $t_{I0}$ : l'instant d'ouverture de l'interrupteur commandé,
   TK : la période de l'évolution de la valeur de tension aux bornes de l'interrupteur commandé,
   n : un entier naturel, par exemple n = 10,
   x, y : valeurs variables.

2. Procédé de commande selon la revendication précédente, **caractérisé en ce que** l'étape de détermination d'au moins une valeur caractéristique de l'évolution est mise en oeuvre par mesure et/ou par calcul dans une phase de configuration du procédé, notamment une phase de test, ou dans une phase de mise en oeuvre du procédé.

3. Procédé de commande selon l'une des revendications 1 ou 2, **caractérisé en ce que** la valeur caractéristique de l'évolution comprend une valeur représentative de la période temporelle des évolutions d'une valeur de tension aux bornes de l'interrupteur commandé suite à une ouverture de l'interrupteur commandé.

**4.** Procédé de commande selon l'une des revendications précédentes, **caractérisé en ce que** x est compris entre 0 et 0.3, de préférence compris entre 0 et 0.25, de préférence compris entre 0 et 0.2 et/ou **en ce que** y est compris entre 0 et 0.3, de préférence compris entre 0 et 0.25, de préférence compris entre 0 et 0.2.

**5.** Procédé de commande selon l'une des revendications précédentes, **caractérisé en ce qu'**il comprend l'utilisation d'une valeur temporelle de déclenchement définissant une deuxième plage temporelle, l'étape d'actionnement de la fermeture de l'interrupteur commandé ayant lieu dès l'instant commun à la première plage temporelle et à la deuxième plage temporelle.

**6.** Procédé de commande selon la revendication précédente, **caractérisé en ce que** la deuxième plage temporelle est définie comme comprenant l'ensemble des instants t vérifiant la formule suivante :

$$\left| t - t_{V0} - \alpha \right| < \frac{TK}{2}$$

avec

$t_{V0}$: l'instant où la tension alternative de la source s'annule,
TK : la période de l'évolution de la valeur de tension aux bornes de l'interrupteur commandé,
$\alpha$ : déclenchement de la commutation de l'interrupteur commandé.

**7.** Support d'enregistrement de données lisible par un calculateur sur lequel est enregistré un programme comprenant des moyens logiciels de mise en oeuvre des étapes du procédé selon l'une des revendications précédentes.

**8.** Dispositif de commande (11) d'un interrupteur commandé (10) pilotant l'alimentation électrique d'un moteur depuis une source de tension alternative (2), **caractérisé en ce qu'**il comprend des éléments matériels (111, 112, 113) et/ou logiciels de mise en oeuvre du procédé selon l'une des revendications 1 à 6.

**9.** Dispositif de commande selon la revendication précédente, **caractérisé en ce que** l'interrupteur commandé comprend un thyristor (12a, 12b).

**10.** Système (6), notamment système de démarrage d'un moteur électrique, comprenant un dispositif de commande (11) selon la revendication 8 ou 9.

**Patentansprüche**

**1.** Verfahren zum Steuern eines gesteuerten Schalters (10), der die Versorgung eines Elektromotors ausgehend von einer Wechselspannungsquelle (2) steuert, das einen Schritt der Betätigung des Schließens des gesteuerten Schalters enthält, wobei der Betätigungszeitpunkt von einem für den Wert der elektrischen Spannung an den Klemmen des gesteuerten Schalters charakteristischen Wert abhängt,
wobei das Verfahren **dadurch gekennzeichnet ist, dass** es die folgenden Schritte enthält:

einen Schritt der Bestimmung mindestens eines für eine Entwicklung des Spannungswerts an den Klemmen des gesteuerten Schalters charakteristischen Werts (TK),
einen Schritt der Bestimmung eines ersten Zeitbereichs ausgehend vom charakteristischen Wert, und
der Betätigungsschritt des Schließens des gesteuerten Schalters während des ersten Zeitbereichs durchgeführt wird,
wobei der erste Zeitbereich definiert wird als die Gesamtheit der Zeitpunkte t enthaltend, die die folgenden Formeln erfüllen:

$$\begin{cases} t - t_{I0} < TK(k + x) \\ t - t_{I0} > TK(k + 1 - y) \\ k \in [0..n] \end{cases}$$

mit

t$_{I0}$ : dem Öffnungszeitpunkt des gesteuerten Schalters,
TK : der Periode der Entwicklung des Spannungswerts an den Klemmen des gesteuerten Schalters,
n : einer natürlichen Zahl, zum Beispiel n = 10,
x, y : variablen Werten.

2.  Steuerverfahren nach dem vorhergehenden Anspruch, **dadurch gekennzeichnet, dass** der Schritt der Bestimmung mindestens eines für die Entwicklung charakteristischen Werts durch Messung und/oder Berechnung in einer Konfigurationsphase des Verfahrens durchgeführt wird,, insbesondere einer Testphase, oder in einer Durchführungsphase des Verfahrens.

3.  Steuerverfahren nach einem der Ansprüche 1 oder 2, **dadurch gekennzeichnet, dass** der für die Entwicklung charakteristische Wert einen für die Zeitperiode der Entwicklungen eines Spannungswerts an den Klemmen des gesteuerten Schalters nach einer Öffnung des gesteuerten Schalters repräsentativen Wert enthält.

4.  Steuerverfahren nach einem der vorhergehenden Ansprüche, **dadurch gekennzeichnet, dass** x zwischen 0 und 0,3 liegt, vorzugsweise zwischen 0 und 0,25 liegt, vorzugsweise zwischen 0 und 0,2 liegt und/oder dass y zwischen 0 und 0,3 liegt, vorzugsweise zwischen 0 und 0,25 liegt, vorzugsweise zwischen 0 und 0,2 liegt.

5.  Steuerverfahren nach einem der vorhergehenden Ansprüche, **dadurch gekennzeichnet, dass** es die Verwendung eines Auslösezeitwerts enthält, der einen zweiten Zeitbereich definiert, wobei der Betätigungsschritt des Schließens des gesteuerten Schalters ab dem dem ersten Zeitbereich und dem zweiten Zeitbereich gemeinsamen Zeitpunkt stattfindet.

6.  Steuerverfahren nach dem vorhergehenden Anspruch, **dadurch gekennzeichnet, dass** der zweite Zeitbereich definiert wird als die Gesamtheit der Zeitpunkte t enthaltend, die die folgende Formel erfüllen:

$$|t - t_{V0} - \alpha| < \frac{TK}{2}$$

mit

t$_{V0}$ : dem Zeitpunkt, an dem die Wechselspannung der Quelle zu Null wird,
TK : der Periode der Entwicklung des Spannungswerts an den Klemmen des gesteuerten Schalters,
$\alpha$ : dem Auslösen der Umschaltung des gesteuerten Schalters.

7.  Datenaufzeichnungsträger, der von einem Rechner lesbar ist, auf dem ein Programm aufgezeichnet ist, das Softwareeinrichtungen zur Durchführung der Schritte des Verfahrens nach einem der vorhergehenden Ansprüche enthält.

8.  Steuervorrichtung (11) eines gesteuerten Schalters (10), der die Stromversorgung eines Motors ausgehend von einer Wechselspannungsquelle (2) steuert, **dadurch gekennzeichnet, dass** sie Hardware- (111, 112, 113) und/oder Softwareelemente zur Durchführung des Verfahrens nach einem der Ansprüche 1 bis 6 enthält.

9.  Steuervorrichtung nach dem vorhergehenden Anspruch, **dadurch gekennzeichnet, dass** der gesteuerte Schalter einen Thyristor (12a, 12b) enthält.

10. System (6), insbesondere Startsystem eines Elektromotors, das eine Steuervorrichtung (11) nach Anspruch 8 oder 9 enthält.

## Claims

1.  Method for controlling a controlled switch (10) operating the power supply of an electric motor from an alternating voltage source (2), comprising a step of activating the closure of the controlled switch, with the activation instant being based on a value characteristic of the value of the electric voltage at the terminals of the controlled switch,

which method is **characterized in that** it comprises the following steps:

- a step of determining at least one value (TK) characteristic of an evolution of the voltage value at the terminals of the controlled switch;
- a step of determining a first time range on the basis of the characteristic value; and

the step of activating the closure of the controlled switch being performed during the first time range, said first time range being defined as comprising all the instants t verifying the following formulae:

$$\begin{cases} t - t_{I0} < TK(k+x) \\ t - t_{I0} > TK(k+1-y) \\ k \in [0..n] \end{cases}$$

with

$t_{I0}$ being the opening instant of the controlled switch;
TK being the period of the evolution of the voltage value at the terminals of the controlled switch;
n being a natural number, for example, n = 10;
x, y being variable values.

2. Control method according to the preceding claim, **characterized in that** the step of determining at least one value characteristic of the evolution is implemented by measuring and/or by computing during a phase of configuring the method, particularly a test phase, or during a phase of implementing the method.

3. Control method according to any of Claims 1 or 2, **characterized in that** the value characteristic of the evolution comprises a value representing the time period of the evolutions of a voltage value at the terminals of the controlled switch following an opening of the controlled switch.

4. Control method according to any of the preceding claims, **characterized in that** x is between 0 and 0.3, preferably between 0 and 0.25, preferably between 0 and 0.2 and/or **in that** y is between 0 and 0.3, preferably between 0 and 0.25, preferably between 0 and 0.2.

5. Control method according to any of the preceding claims, **characterized in that** it comprises the use of a triggering time value defining a second time range, the step of activating the closure of the controlled switch having occurred from the instant common to the first time range and to the second time range.

6. Control method according to the preceding claim, **characterized in that** the second time range is defined as comprising all the instants t verifying the following formula:

$$\left| t - t_{V0} - \alpha \right| < \frac{TK}{2}$$

with

$t_{V0}$ being the instant at which the alternating voltage of the source discontinues;
TK being the period of the evolution of the voltage value at the terminals of the controlled switch;
$\alpha$ being the triggering of the switching of the controlled switch.

7. Recording medium for data that can be read by a computer on which a program is recorded that comprises software means for implementing steps of the method according to any of the preceding claims.

8. Device (11) for controlling a controlled switch (10) operating the electric power supply of a motor from an alternating voltage source (2), **characterized in that** it comprises hardware (111, 112, 113) and/or software elements for implementing the method according to any of Claims 1 to 6.

9. Control device according to the preceding claim, **characterized in that** the controlled switch comprises a thyristor (12a, 12b).

10. System (6), particularly a system for starting an electric motor, comprising a control device (11) according to Claim 8 or Claim 9.

EP 2 756 592 B1

FIG.1

FIG.2

FIG.3

FIG.4

FIG.5

FIG.6

10

Lm    Rm

$C_{snubber}$

C2

FIG.7

Inductance équivalente du moteur $L_t$ (pu)

1.12

1.1

1.08

1.06

1.04

1.02

1

0    10    20    30    40    50    60    70    80    90

Vitesse moteur en pourcents de la vitesse de synchronisme

FIG.8

FIG.9

FIG.10

FIG.11

17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0189074 A
- US 5008608 A